# EUROPEAN PATENT APPLICATION

(11) **EP 4 826 104 A1**
(43) Date of publication of application: **21.10.2026**
(21) Application number: 24904456.1
(22) Date of filing: 13.12.2024
(51) Int. Cl.: C22C 38/58, C22C 38/44, C22C 38/48, C22C 38/46, C22C 38/50, C22C 38/54, C21D 8/02, C21D 9/50

(54) **STEEL, WELDING HEAT AFFECTED ZONE AND MANUFACTURING METHOD THEREOF**

(30) Priority: 15.12.2023 KR 20230183884
(71) Applicant: POSCO Co., Ltd, Gyeongsangbuk-do 37859 (KR)
(72) Inventor: KIM, Dae-Woo, Pohang-si, Gyeongsangbuk-do 37877 (KR)
(74) Representative: Meissner Bolte Partnerschaft mbB
(86) International application number: PCT/KR2024/096996
(87) International publication number: WO 2025/127893

(57) **Abstract**

The present invention relates to a steel applied to a liquefied gas storage tank and the like, a welding heat affected zone, and a method for manufacturing same.

## Description

### Technical Field

The present disclosure relates to a steel applied to a liquefied gas storage tank or the like, a welding heat affected zone, and a method for manufacturing the same.

### Background Art

Recently, as environmental regulations have been strengthened, demand for liquefied gas which is an environmentally friendly fuel is increasing, and thus, construction of liquefied gas carrying vessel which carries liquefied gas or propulsion ship which uses liquefied gas as a fuel is increasing. Among the liquefied gases, in the case of liquefied natural gas and liquefied ethylene/ethane gas, since their liquefaction temperature is very low, high-Ni steel is being generally used. However, LPG, ammonia, CO₂, and the like are gases having a liquefaction temperature of about -60°C, and in order to reduce construction costs of tanks, ships, or the like for storing gas, use of a carbon steel having improved strength or low-temperature toughness becomes more common.

Since a conventional tank for transporting liquefied gas mainly uses the design of a large type A tank to which high voltage is not applied, there was no demand for high-strength or heavy materials. However, recently, since CO₂ tanks or ammonia fuel tanks requiring high voltage during liquefaction are designed as type C, thickening is more demanded along with higher strengthening of a steel material. Also, since post-weld heat treatment (PWHT) which is being required by the IGC code during the drying of the type C tanks is essentially applied, the steel material further requires guarantees of physical properties after PWHT.

The PWHT is a process of maintaining for a certain period of time at a high temperature in order to relieve residual stress of a material after welding. Since the grain size and precipitate size of a low-temperature structure are increased in the PWHT process to deteriorate material quality such as strength or toughness, quality assurance is difficult. In particular, in the case of the steel material for CO₂ tanks, recently in classification, crack tip opening displacement (CTOD) quality in a PWHT post-welding heat affected zone (HAZ) has been demanded as a structural compatibility evaluation item for improving tank design stability.

Meanwhile, liquefied CO₂ has different liquefaction temperatures depending on pressure, and thus, the tanks may be largely divided into tanks for low pressure and tanks for medium pressure.

Since the tanks for low pressure usually having a use pressure of 5 to 10 bar should be cooled to a temperature of -60°C for CO₂ liquefaction, a steel material having a tensile strength (TS) grade of 600 to 650 MPa which may guarantee a low-temperature impact toughness of -60°C or lower is used as the steel material for storage tanks. In order to maintain a low temperature after the liquefaction, separate cooling maintenance equipment is needed, and this becomes the main cause of increased initial installation and maintenance costs.

The tanks for medium pressure having a use pressure of 18 to 20 bar requires a higher liquefaction temperature of -35°C, and thus, storage and transport of liquefied CO₂ may be easier. However, since the operating pressure is high, the steel material for tanks for medium pressure also uses an ultra-high strength steel having TS of 780 MPa or more instead of the conventional steel material having a TS grade of 600 to 650 MPa. Since a steel material including high alloy components is manufactured through a quenching-tempering (QT) heat treatment for securing high strength, it is not easy to secure weld quality.

Patent Document 1 discloses that a steel material capable of guaranteeing low-temperature impact toughness at -40°C may be manufactured by heating a slab which is an alloy component including by weight: 0.06 to 0.12% of C, 0.02 to 0.06% of Si, 0.7 to 1.2% of Mn, 0.006 to 0.012% of Ti, 0.002 to 0.01% of Al, 0.3 to 0.5% of Cr, 0.3 to 0.4% of Mo, 0.03 to 0.04% of V, 0.002 to 0.003% of N, 0.002 to 0.01% of S, 0.007% of less of P, and a remainder of Fe and impurities to 1100 to 1200°C, completing rolling at 800 to 900°C with a cumulative reduction rate of 30% or more, performing air cooling, quenching again at 910 to 930°C, and performing a tempering heat treatment at 650 to 680°C.

Though a method for improving toughness by distributing a uniform Al-Ti-MnS composite oxidizing inclusion in the welding heat affected zone to refine HAZ crystal grains, the steel material does not guarantee the material quality after PWHT and has the tensile strength of a base material as low as 550 to 650 MPa, and thus, is not appropriate as a steel material for medium pressure liquefied CO₂(LCO₂).

Meanwhile, Patent Document 2 discloses a method for manufacturing a P690QL2 steel material for a LCO₂ storage tank, which includes, by weight: 0.09 to 0.12% of C, 0.9 to 1.3% of Mn, 0.015% or less of Ti, 0.002% or less of S, 0.06% or less of Nb, 0.08% or less of V, 1.5 to 2.5% of Ni, 0.2 to 0.4% of Cr, 0.3 to 0.4% of Mo, 0.3% or less of Cu, 0.03 to 0.05% of Al, 0.0005 to 0.005% of Ca, 0.005% or less of N, 0.0003% or less of H, and a remainder of Fe and impurities, has a thickness of 50 mm or less, and may guarantee low-temperature impact toughness. Patent Document 2 discloses that when the material is heated to a temperature of 1160 to 1210°C, rolled at 780 to 880°C, quenched at 890 to 920°C, and tempering heat treated at a temperature of 630 to 680°C, a tensile strength of 780 MPa or more and an impact toughness of 47 J or more at -60°C may be secured after PWHT.

However, since the CTOD guaranteed temperature and standards of the HAZ part do not meet the levels required in the present disclosure, practical measures available as the steel material for a medium pressure LCO₂ storage tank have not been suggested.

Patent Document 3 discloses that a steel sheet, which includes, by weight: 0.03 to 0.18% of C, 0.30% or less of Si, 0.3 to 1.6% of Mn, 0.015% or less of P, 0.005% or less of S, 2.0% or less of Cu, 1.0 to 7.0% of Ni, 0.01 to 0.20% of Al, 0.005% or less of Ca, 0.0100% or less of N, 0.0060% or less of O, and a remainder of Fe and impurities, and is characterized by having Mn/Ni which is a content ratio of Mn and Ni of 0.80 or less, a carbon equivalent based on WES, Ceq of 0.430 to 0.900%, a tensile strength of 780 MPa or more and 930 MPa or less, a yield strength of 630 MPa or more and 750 MPa or less, a yield ratio of 85% or less, a HAZ part impact toughness evaluated at 0°C of 100 J or more, a sheet thickness of 40 mm or more and 120 mm or less, and Hvmin/Hvmax of 0.85 or less, the Hvmin being an average value of values up to 20% on the smaller side and the Hvmax being an average value of the values down to 20% on the larger side of Vickers hardness, when the Vickers hardness is measured at 220 points or more at a position of 1/4 of a sheet thickness having a thickness of 40 mm or more and 120 mm or less on the surface, may be manufactured. Though the strength meets the range required in the steel material for medium-pressure LCO₂, impact toughness is not guaranteed around -40°C at which CO₂ is liquefied, and thus, the steel material may not be appropriate. In addition, when Ceq and hardness are excessively high, a martensite fraction during quenching is excessively increased, and it may be difficult to secure impact toughness and HAZ part CTOD characteristics.

Therefore, in order to secure an appropriate low-temperature phase fraction, ranges of Ceq and a surface hardness value corresponding thereto are required, but since it is not described in the document, it is not appropriate as a technology of manufacturing an ultra-high strength steel material for medium pressure LCO₂.

Therefore, the conventional technologies described above did not suggest practical solutions for manufacturing an ultra-high strength steel material for medium pressure LCO₂ having a yield strength after post weld heat treatment (PWHT) of 690 MPa or more, a tensile strength of 770 to 940 MPa, a low-temperature impact toughness at -40°C or lower, and CTOD quality of 0.1 mm or more.
(Patent Document 1) Korean Patent Laid-Open Publication No. 10-2022-7030534 (Published on October 5, 2022)
(Patent Document 2) Chinese Patent Laid-Open Publication No. CN2022-11506158 (published on November 29, 2022)
(Patent Document 3) PCT Patent Publication No. WO2021-255858-023761 (Published on December 23, 2021)

### Summary of Invention

### Technical Problem

An aspect of the present disclosure is to provide a welding heat affected zone having excellent low-temperature CTODD quality as well as excellent strength and low-temperature impact toughness after post-weld heat treatment (PWHT), and a method for manufacturing the same.

Another aspect of the present disclosure is to provide a steel material having excellent strength and low-temperature impact toughness after post-weld heat treatment (PWHT), and a method for manufacturing the same.

An object of the present disclosure is not limited to the above description. Additional objects of the present disclosure are described throughout the specification, and any person with ordinary skill in the art to which the present disclosure pertains has no difficulty in understanding of the additional object of the present disclosure from the description in the specification of the present disclosure.

### Solution to Problem

According to an aspect of the present disclosure, a welding heat affected zone comprises by weight: 0.05 to 0.20% of C, 0.05 to 0.50% of Si, 0.5 to 2.0% of Mn, 0.005 to 0.10% of Al, 0.010% or less of P, 0.0050% or less of S, 0.001 to 0.070% of Nb, 0.001 to 0.30% of V, 0.001 to 0.030% of Ti, 0.01 to 1.0% of Cr, 0.01 to 1.0% of Mo, 0.01 to 0.60% of Cu, 1.0 to 4.0% of Ni, 0.001 to 0.005% of B, 0.0005 to 0.0040% of Ca, 0.002% or less of O, and a remainder of Fe and other unavoidable impurities,
wherein Ceq defined by the following Relation 1 satisfies a range of 0.50 to 0.70,
a maximum size of CaO-Al₂O₃-X (X is one or more of Ti, Mg, and S) composite oxidizing inclusions, which are observed in an upper layer part which is in an area from a surface layer to t/4 (where t is a thickness in mm) in a thickness direction from a surface, is 50 µm or less, and the number per unit area of 1 µm² of the composite oxidizing inclusions is 50 or less,
a grain boundary occupancy ratio of cementite present in a grain boundary is 10% or less, and an average size of the cementite is 1 µm or less, and
a cross-sectional part hardness is 200 to 300 HB: 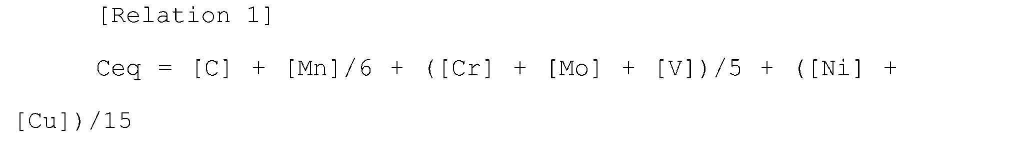 [Relation 1] Ceq = [C] + [Mn]/6 + ([Cr] + [Mo] + [V])/5 + ([Ni] + [Cu])/15
wherein [C], [Mn], [Cr], [Mo], [V], [Ni], and [Cu] are contents (wt%) of C, Mn, Cr, Mo, V, Ni, and Cu included in the steel material, respectively, and when the components are not intentionally included, 0 is included.

The welding heat affected zone may be a coarse grained heat affected zone (CGHAZ).

A microstructure of the welding heat affected zone may include 50% or more of tempered martensite as an area fraction and a remainder of bainite.

An average particle size of a prior austenite in the welding heat affected zone may be 200 µm or less.

The welding heat affected zone may have a Charpy impact absorption energy at -40°C of 40 J or more and CTOD characteristics at -35°C of 0.1 mm or more.

According to another aspect of the present disclosure, a method for manufacturing a welding heat affected zone comprises: preparing a steel material in which the composition and Ceq are satisfied,
a maximum size of CaO-Al₂O₃-X (X is one or more of Ti, Mg, and S) composite oxidizing inclusions observed in an upper layer part which is in an area from a surface layer to t/4 (where t is a thickness in mm) in a thickness direction from a surface is 50 µm or less, and the number per unit area of 1 µm² of the inclusions of 50 or less;
welding the steel material; and
subjecting the welded steel material to a post-weld heat-treatment.

A thermal cycle of the welding may be heating to a maximum temperature of 1250 to 1400°C at a heating rate up to 50°C/s, maintaining at a target temperature for 5 to 10 seconds, performing first cooling down to 500°C at a cooling rate of 10 to 20°C/s, and then performing second cooling down to 200°C at a cooling rate of 5 to 15°C/s.

The welding may be FCAW welding performed at a heat input quantity of 1.0 to 2.0 kJ/mm under welding conditions of preheating and interpass temperatures at 150 to 250°C or SAW welding performed at a heat input quantity of 2.0 to 4.0 kJ/mm under welding conditions of preheating and interpass temperatures at 150 to 250°C.

The post-weld heat treatment may be performed by maintaining at 595 to 625°C for 180 to 540 minutes (min).

The steel material may comprise 50% or more (including 100%) of tempered martensite as an area fraction and a remainder of bainite and other unavoidable structures, as a microstructure, and packet sizes of the tempered martensite and the bainite may be 17 µm or less.

When the tempered martensite is more than 80%, the steel material may have a steel material cross-sectional Brinell hardness of 220 to 290 HB.

The steel material may have 5 or more VC or VCN precipitates having a diameter of 5 to 15 nm per 1 µm², of precipitates observed in a steel material cross section.

Prior austenite of the steel material may have an average particle size of 30 µm or less.

The steel material may be manufactured by a manufacturing method comprising
manufacturing a steel slab;
reheating the steel slab to a temperature within a range of 1050 to 1300°C;
hot rolling the steel slab at a finish hot rolling temperature of 830 to 1050°C to manufacture a steel material;
heating the steel material to a temperature within a range of 820 to 950°C, maintaining the temperature for 10 to 40 minutes, and cooling to a temperature of 300°C or lower at a cooling rate of 3°C/s to 80°C/s based on a temperature at a steel material thickness t/4; and
after the cooling, performing a tempering heat treatment of heating the steel material to 550 to 700°C and maintaining the temperature for 5 to 60 minutes.

The manufacturing of a steel slab may comprise:
after second refining, adding a metal Ca wire to a molten steel so that an amount of Ca added is 0.015 to 0.15 kg/ton; and
after adding Ca, performing clean bubbling for 5 to 40 min so that an inert gas blowing amount in a ladle is 10 to 50 liters/min,
wherein an addition rate of the Ca wire is 100 to 300 meters/min, and the number of inert gas blowing points in the ladle is two.

When the temperatures of the tempering heat treatment and the post-weld heat treatment are the same, LMP according to the following Relation 2 may be 17.0 to 19.5:

[Relation 2] $LMP = {T}_{k} \left(Log t+20\right)$
wherein Tₖ = tempering and PWHT temperatures in Kelvin, and t = tempering and PWHT time (hour).

When the temperatures of the tempering heat treatment and the post-weld heat treatment are different, LMP according to the following Relation 3 may be 17.0 to 19.5:

[Relation 3] $\begin{matrix}T \left({logt}_{eq}+20\right) = {T}_{i} \left({logt}_{i}+20\right) \\ Total LMP = {T}_{i} \left[log\left({t}_{i}+{t}_{eq}\right)+20\right]\end{matrix}$

wherein Tᵢ: temperature of PWHT in Kelvin, tᵢ: PWHT time (hour), T: tempering temperature in Kelvin, and t_{eq}: tempering time (hour) equivalent to conversion to the PWHT temperature.

According to another aspect of the present disclosure, a steel material wherein the above composition and the Ceq are satisfied,
50% or more of tempered martensite as an area fraction is included as a microstructure,
a packet size of the microstructure is 17 µm or less, and
a maximum size of CaO-Al₂O₃-X (X is one or more of Ti, Mg, and S) composite oxidizing inclusions, which are observed in an upper layer part which is in an area from a surface layer to t/4 (where t is a thickness in mm) in a thickness direction from a steel material surface, is 50 µm or less, and the number per unit area of 1 µm² of the composite oxidizing inclusions is 50 or less: [Relation 1] 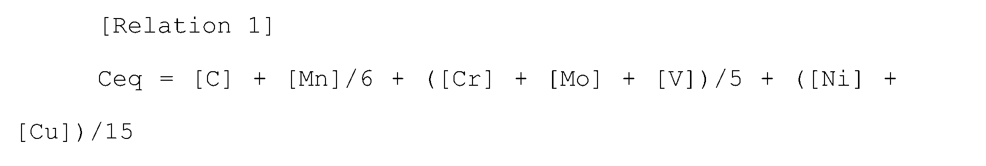 Ceq = [C] + [Mn]/6 + ([Cr] + [Mo] + [V])/5 + ([Ni] + [Cu])/15 wherein [C], [Mn], [Cr], [Mo], [V], [Ni], and [Cu] are contents (wt%) of C, Mn, Cr, Mo, V, Ni, and Cu included in the steel material, respectively, and when the components are not intentionally included, 0 is included.

According to still another aspect of the present disclosure, a method for manufacturing a steel material comprises: manufacturing a steel slab in which the composition and the Ceq are satisfied, a maximum size of CaO-Al₂O₃-X (X is one or more of Ti, Mg, and S) composite oxidizing inclusions observed in an upper layer part which is in an area from a surface layer to t/4 (where t is a thickness in mm) in a thickness direction from a steel slab surface is 50 µm or less, and the number per unit area of 1 µm² of the composite oxidizing inclusions is 50 or less;
reheating the steel slab to a temperature within a range of 1050 to 1300°C;
hot rolling the steel slab at a finish hot rolling temperature of 830 to 1050°C to manufacture a steel material;
heating the steel material to a temperature within a range of 820 to 950°C, maintaining the temperature for 10 to 40 minutes, and cooling to a temperature of 300°C or lower at a cooling rate of 3°C/s to 80°C/s based on a temperature at a steel material thickness t/4; and
after the cooling, performing a tempering heat treatment of heating the steel material at 550 to 700°C and maintaining the temperature for 5 to 60 minutes.

### Advantageous Effects of Invention

According to an aspect of the present disclosure, a welding heat affected zone having low-temperature impact toughness and low-temperature CTOD characteristics after post-weld heat treatment (PWHT) and a method for manufacturing the same may be provided.

According to another aspect of the present disclosure, a steel material which has excellent strength and low-temperature impact toughness by minimizing deterioration of physical properties even after post-weld heat treatment (PWHT) and a method for manufacturing the same may be provided.

Various and beneficial merits and effects of the present disclosure are not limited to the descriptions above, and may be more easily understood in a process of describing specific example embodiments in the present disclosure.

### Best Mode for Invention

Terms used in the present specification are for describing rather than limiting the present disclosure. In addition, a singular form used in the present specification includes a plural form also, unless the relevant definition has a clearly opposite meaning thereto.

The meaning of "comprising" used in the specification is to embody the configuration and is not to exclude the presence or addition of other configurations.

Unless otherwise defined, all terms including technical terms and scientific terms used in the present specification have the same meaning as commonly understood by a person with ordinary skill in the art to which the present disclosure pertains. Pre-defined terms are interpreted as being consistent with the relevant technical literature and the disclosure herein.

Hereinafter, preferred example embodiments of the present disclosure will be described. The example embodiments of the present disclosure may be modified in various forms, and the scope of the disclosure should not be interpreted to be limited to the example embodiments set forth below. These example embodiments are provided in order to describe the present disclosure in more detail to those with ordinary skill in the art to which the present disclosure pertains.

First, the composition of a steel material which is an example of the present disclosure will be described in detail.

The steel material comprises, by weight: 0.05 to 0.20% of C, 0.05 to 0.50% of Si, 0.5 to 2.0% of Mn, 0.005 to 0.10% of Al, 0.010% or less of P, 0.0050% or less of S, 0.001 to 0.070% of Nb, 0.001 to 0.30% of V, 0.001 to 0.030% of Ti, 0.01 to 1.0% of Cr, 0.01 to 1.0% of Mo, 0.01 to 0.60% of Cu, 1.0 to 4.0% of Ni, 0.001 to 0.005% of B, 0.0005 to 0.0040% of Ca, 0.002% or less of O, and a remainder of Fe and other unavoidable impurities.

Ceq defined by the following Relation 1 may be 0.50 to 0.70: 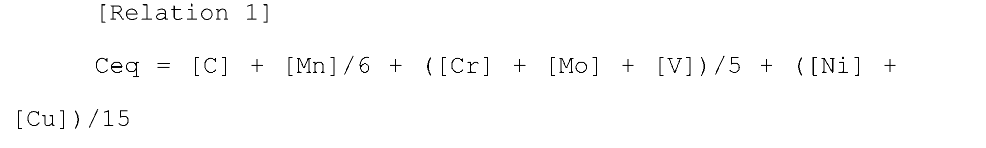 [Relation 1] Ceq = [C] + [Mn]/6 + ([Cr] + [Mo] + [V])/5 + ([Ni] + [Cu])/15
wherein [C], [Mn], [Cr], [Mo], [V], [Ni], and [Cu] are contents (wt%) of C, Mn, Cr, Mo, V, Ni, and Cu included in the steel material, respectively, and when the components are not intentionally included, 0 is included.

The composition of the steel material may be the same as the compositions of a steel slab, a steel material before welding, a steel material after welding, a base material of the steel material subjected to a post-weld heat treatment, and also the welding heat affected zone (HAZ).

Hereinafter, the composition will be described in detail. Hereinafter, unless otherwise specifically indicated, % and ppm described related to an alloy composition are by weight.

### Carbon (C): 0.05 to 0.20%

Since carbon (C) is the most important element for securing basic strength, it needs to be contained in a steel within an appropriate range, and in order to obtain the addition effect, 0.05% or more of carbon (C) should be added. Preferably, 0.10% or more of carbon (C) may be included. However, when the content of carbon (C) exceeds a certain level, a fraction of martensite is excessively increased, a hardness of the welding heat affected zone (HAZ) is increased, and a fraction of grain boundary cementite is increased, so that impact propagation resistance in an impact test or CTOD test is lowered, and a tough value required in the present disclosure may not be secured. Therefore, the content of carbon (C) of the present disclosure may be 0.20%, and more preferably, the upper limit of the content of carbon (C) may be 0.18%.

### Silicon (Si): 0.05 to 0.50%

Since silicon (Si), which is a substitutional element, improves strength of a steel material through solid solution strengthening and has a strong deoxidizing effect, it is an essential element for manufacturing clean steel. Therefore, silicon (Si) may be included at 0.05% or more, preferably 0.20% or more. However, when silicon (Si) is included in a large amount, martensite-austenite (MA) phase is formed, and the base strength of the martensite phase may be excessively increased to deteriorate low-temperature impact toughness, and thus, the upper limit of the content may be 0.50%. The upper limit of the silicon (Si) content may be more preferably 0.40%.

### Manganese (Mn): 0.5 to 2.0%

Manganese (Mn) is an element which improves strength by solid solution strengthening and improves hardenability to produce low-temperature transformation phase. Therefore, in order to secure a yield strength of 690 MPa or more, it is preferred to include 0.5% or more of manganese (Mn). The content of manganese (Mn) may be preferably 0.7% or more. However, since manganese (Mn) may form MnS which is a non-metal inclusion stretched with sulfur (S) to deteriorate toughness and act as an impact starting point, it may be a cause to rapidly deteriorate low-temperature impact toughness of a steel material. Therefore, it is preferred to manage the content of manganese (Mn) to 2.0% or less, and the content of manganese (Mn) may be preferably 1.5% or less.

### Aluminum (Al): 0.005 to 0.10%

Aluminum (Al) is one of the strong deoxidizers in a steelmaking process, along with silicon (Si), and in order to obtain the effect, it is preferred to include 0.005% or more of aluminum. The lower limit of aluminum (Al) content may be more preferably 0.01%. However, when the content of aluminum (Al) is excessive, the fraction of Al₂O₃ in the oxidizing inclusion produced as a result of deoxidization is excessively increased to cause coarsening of the size and make it difficult to remove the inclusion during refining, and thus, may be a cause to deteriorate low-temperature impact toughness. Therefore, it is preferred to manage the content of aluminum (Al) to 0.10% or less. The content of aluminum (Al) may be more preferably 0.07% or less.

### Phosphorus (P): 0.010% or less (including 0%) and sulfur (S): 0.0050% or less (including 0%)

Phosphorus (P) and sulfur (S) are elements which cause brittleness in a crystal grain boundary or form a coarse inclusion to cause brittleness. Therefore, it is preferred not to include phosphorus (P) and sulfur (S). In order to improve brittle crack propagation resistance, it is preferred to include 0.010% or less of phosphorus (P) and 0.0050% or less of sulfur (S).

### Niobium (Nb): 0.001 to 0.070%

Niobium (Nb) is an element which is precipitated in the form of NbC or NbCN and improves strength of a base material. In addition, since niobium (Nb), which is brought into a solid solution state during reheating at a high temperature, is very finely precipitated in the form of NbC during rolling to suppress recrystallization of austenite, it has an effect of refining the structure. Therefore, it is preferred to include 0.001% or more of niobium (Nb), and the content of niobium (Nb) may be more preferably 0.005% of more. However, when niobium (Nb) is excessively included, undissolved niobium (Nb) is produced in a TiNb (C,N) form and is a cause to deteriorate low-temperature impact toughness, and thus, it is preferred that the upper limit of the niobium (Nb) content is 0.070%. The upper limit of the niobium (Nb) content may be more preferably 0.065% or less.

### Vanadium (V): 0.001 to 0.30%

Since Vanadium (V) is almost all in a solid-solution state again during reheating, it has an insignificant strengthening effect by precipitation or solid solution during subsequent rolling is insignificant, but is precipitated as a very fine carbonitride in the process of tempering heat treatment or PWHT to improve strength. In order to sufficiently obtain the effect, vanadium (V) needs to be added at 0.001% or more. The lower limit of the vanadium (V) content may be more preferably 0.01%. However, when the content is excessive, vanadium excessively increases a slab surface layer hardness due to the high hardenability to act as a factor of surface cracks and the like during flange processing, and also rapidly increases manufacturing costs, which is not beneficial for commercial purposes. Therefore, the vanadium (V) content may be limited to 0.3% or less. The content of vanadium (V) may be more preferably 0.25% or less.

### Titanium (Ti): 0.001 to 0.030%

Titanium (Ti) is a component which is precipitated as TiN during reheating to suppress growth of prior austenite crystal grains at a high temperature and greatly improve low-temperature toughness. In order to obtain the effects, it is preferred to include 0.001% or more of titanium (Ti). However, when titanium (Ti) is excessively included, low-temperature toughness may be decreased due to blockage of soft cast nozzles or crystallization of the center part. In addition, since titanium (Ti) is bonded to nitrogen (N) to form a coarse TiN precipitate in the thickness center part to deteriorate an elongation of a product, it may deteriorate uniform elongation in a stamping process to cause surface cracks. Therefore, the titanium (Ti) content may be 0.030% or less. The upper limit of the titanium (Ti) content may be preferably 0.025% or less, and the content of titanium (Ti) may be more preferably 0.018% or less.

### Chromium (Cr): 0.01 to 1.0%

Chromium (Cr) is a component which increases quenchability to form a low-temperature transformation structure, thereby increasing yield strength and tensile strength. In addition, it slows down a spherodization speed of cementite, thereby preventing a decrease in strength. For these effects, 0.01% or more of chromium (Cr) may be included. However, when the chromium (Cr) content is excessive, the size and the fraction of a Cr-Rich coarse carbide such as M₂₃C₆ are increased to deteriorate impact toughness of a steel material, solid solubilizing degree of niobium (Nb) and the fraction of fine precipitates such as NbC in the steel material are decreased, and thus, decreased strength of products may be problematic. Therefore, the upper limit of the chromium (Cr) content in the present disclosure may be 1.0%. The upper limit of the chromium (Cr) content may be preferably 0.8%.

### Molybdenum (Mo): 0.01 to 1.0%

Molybdenum (Mo) is an element which increases grain boundary strength and has a large effect of solid solution strengthening in ferrite, and is an element which effectively contributes an increase in strength and ductility of a product. In addition, molybdenum (Mo) has an effect of preventing toughness reduction by grain boundary segregation of impurity elements such as phosphorus (P). For these effects, 0.01% or more of molybdenum (Mo) may be added. However, molybdenum (Mo) is an expensive element, and when excessively added, it may greatly increase manufacturing costs, and thus, it is preferred that the upper limit of the molybdenum (Mo) content is 1.0%.

### Copper (Cu): 0.01 to 0.60%

Since copper (Cu) may greatly improve strength of a matrix phase by solid solution strengthening in ferrite and also has an effect of suppressing corrosion in a wet hydrogen sulfide atmosphere, it is an element favorable in the present disclosure. For these effects, 0.01% or more of copper (Cu) may be included. The content of copper (Cr) may be more preferably 0.03% or more. However, when the copper (Cu) content is excessive, copper (Cu) is more likely to cause star cracks on the surface of a steel sheet, and may cause a problem of greatly increasing manufacturing costs as an expensive element. Therefore, the upper limit of the copper (Cu) content is preferably 0.60%, and more preferably 0.35%.

### Nickel (Ni): 1.0 to 4.0%

Nickel (Ni) is an element which effectively contributes to an increase in stacking defects at a low temperature to facilitate cross slip of dislocation to improve impact toughness and improvement of hardenability to improve strength. For these effects, 1.0% or more of nickel (Ni) may be included. The content of nickel (Ni) may be preferably 0.10% or more. However, when nickel (Ni) is excessively added, manufacturing costs may be increased due to high cost, and thus, the upper limit of the nickel (Ni) content is preferably 4.0%, and more preferably 3.0%.

### Calcium (Ca): 0.0005 to 0.0040%

When calcium (Ca) is added after deoxidization by aluminum (Al), calcium is bonded to sulfur (S) which forms a MnS inclusion to suppress MnS production and also forms spherical CaS simultaneously, thereby suppressing crack occurrence by hydrogen-induced cracking. In order to sufficiently form sulfur (S) contained as an impurity into CaS, it is preferred to include 0.0005% or more of calcium (Ca). However, when the added amount is excessive, calcium (Ca) remaining after forming CaS is bonded to oxygen (O) to form a coarse oxidizing inclusion, which is stretched and fractured during rolling and becomes a cause to deteriorate lamella tearing resistant characteristics. Therefore, the upper limit of the calcium (Ca) content is preferably 0.0040%.

### Boron (B): 0.001 to 0.005%

B is an element which is effective for improving quenchability of a hot rolled steel sheet by delaying transformation from austenite to ferrite during cooling transformation. In order to obtain the effect, it is preferred to add 0.001% or more of boron, but when the content is more than 0.005%, the strength is excessively increased, which deteriorates impact toughness. In addition, a boron oxide is formed to deteriorate surface quality of the steel sheet.

### Oxygen (O): 0.002% or less

O is bonded to Ca or Al in a molten steel and present in the form of CaO or Al₂O₃, or a composite oxidizing inclusion of CaO-Al₂O₃. The oxidizing inclusion produced at a high temperature is crushed in a slab rough rolling step and is long-stretched in a rolling direction, and remains without being dissolved in HAZ during welding as well as in a rolling/heat treatment process of a base material. Since the end of the crushed oxidizing inclusion may act as a starting point of fracture when evaluating impact and CTOD, due to a notch effect, it is preferred to remove it as much as possible through floatation in a second refining process, and thus, it is preferred that the oxygen concentration in a molten steel is 20 ppm or less. In the present disclosure, a second refining method which may extremely control the oxidizing inclusion is suggested, and after application of the present process, a total oxygen amount may be more preferably 15 ppm or less, and most preferably 10 ppm or less.

In addition to the components described above, Fe and other unavoidable impurities may be included. However, since in a common manufacturing process, unintended impurities may be unavoidably incorporated from raw materials or the surrounding environment, these may not be completely excluded. Since these impurities are known to any person with ordinary knowledge in the art, the entire contents thereof are not particularly mentioned in the present specification.

In addition, further addition of effective components other than the components described above is not completely excluded.

Ceq of the composition defined by the following Relation 1 may be 0.50 to 0.70: 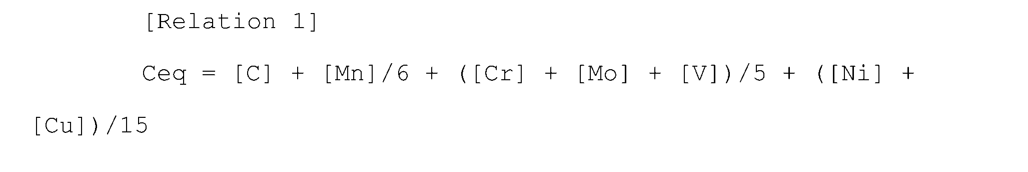 [Relation 1] Ceq = [C] + [Mn]/6 + ([Cr] + [Mo] + [V])/5 + ([Ni] + [Cu])/15
wherein [C], [Mn], [Cr], [Mo], [V], [Ni], and [Cu] are contents (wt%) of C, Mn, Cr, Mo, V, Ni, and Cu included in the steel material, respectively, and when the components are not intentionally included, 0 is included.

When the Ceq of Relation 1 is less than 0.50, since a martensite fraction is decreased, a high yield strength required in the present disclosure may not be secured, and since a bainite fraction is excessively increased, a grain boundary cementite occupancy ratio in a welding heat affected zone (HAZ), in particular, a coarse grained heat affected zone (CGHAZ) after post-weld heat treatment (PWHT) is increased, and thus, appropriate impact toughness and HAZ CTOD values required in the present disclosure may not be secured. In addition, when the Ceq value is more than 0.70, hardness is excessively increased, cleavage fracture may be caused, and thus, propagation resistance to cracks is reduced, so that it is not easy to secure appropriate impact toughness and the CTOD characteristics in the welding heat affected zone.

The steel material which is an example of the present disclosure may have a maximum size of CaO-Al₂O₃-X (X is one or more of Ti, Mg, and S) composite oxidizing inclusions, which are observed in the upper layer part which is in a range from the surface to t/4 (t: thickness) in a thickness direction from the steel material surface based on a cross section, of 50 µm or less, and the number of the composite oxidizing inclusion per unit area of 1 µm² of 50 or less.

The composite oxidizing inclusion may be observed in a steel material before welding, a steel material after welding, a base material of a steel material subjected to a post-weld heat treatment, and a welding heat affected zone (HAZ) as well as a steel slab.

When the composite oxidizing inclusion is formed in a steel slab manufacturing step, it may be then crushed during rough rolling without changing the form and fraction in the product manufacturing step and stretched out in a rolling direction. Since the crushed oxidizing inclusion may act as a place where stress is concentrated and act as a starting point when fracture occurs, when the amount or size of the oxidizing inclusion produced in the steel slab manufacturing process is large, the amount of the oxidizing inclusion crushed after rough rolling is increased, which becomes a main cause of deteriorating impact toughness and CTOD quality. Therefore, when the size of the composite oxidizing inclusion in the product upper layer part which in a range from a surface layer to t/4 is more than 50 µm or the number per 1 µm² is more than 50, it may be difficult to secure low-temperature impact toughness at -40°C and HAZ CTOD quality at -35°C or lower based on the base material.

The steel material of the present disclosure has tempered martensite or a tempered martensite-bainite mixed structure as a matrix structure. Specifically, the steel material includes 50% or more of tempered martensite as an area fraction and a remainder of bainite and an unavoidably occurring structure.

When the matrix structure is a mixed structure of tempered martensite-bainite, the area fraction of the tempered martensite may be 50 to 80%.

When the matrix structure is formed of a single structure of more than 80% of tempered martensite, a base material cross-sectional part hardness of the steel material after PWHT may be 220 to 290 HB based on Brinell.

The unavoidably occurring structure may be martensite-austenite (MA)phase and the like.

The low-temperature structure of the tempered martensite or bainite may have a packet size of 17 µm or less.

The prior austenite of the steel material may have an average particle size of 30 µm or less.

Fine VC or VCN precipitates having a precipitate diameter of 5 to 15 nm observed in the cross section of the steel material may include 5 or more precipitates per 1 µm².

The characteristics of the microstructure may be the same in the base material of the steel material subjected to a post-weld heat treatment as well as the steel material before welding and the steel material after welding.

The prior austenite of the steel material may have an average particle size of 30 µm or less. Post-weld heat treatment (PWHT) is generally performed at a high temperature of 595°C in order to prevent weld cracks through stress relieving after welding. Herein, since dislocation density may be decreased, and a cross-sectional part hardness may be lowered, weld integrity may be increased. However, cementite produced in a bainite loath interface is decomposed in a process of maintaining at a high temperature for a long time, so that long-range diffusion of carbon to an austenite grain boundary occurs. Thus, when a crystal grain size is increased, a grain boundary area occupied by cementite is decreased, and thus, a segregation degree may be increased, and impact toughness may be deteriorated. Therefore, the particle size of prior austenite needs to be controlled by appropriate low-temperature strong reduction. Thus, the prior austenite may have a particle size of, preferably 30 µm or less, more preferably 25 µm or less.

As the temperature and time of the PWHT are longer, coarse cementite is spheroidized in a prior austenite grain boundary, a part of which is produced as film-like cementite. When the cementite is produced in the grain boundary, grain boundary strength becomes lower than shear strength, which becomes the main cause of occurrence of intergranular fracture. Therefore, in order to prevent occurrence of intergranular fracture after PWHT, martensite which only causes short-range diffusion should be included at an appropriate fraction or more. However, when a ratio of martensite is too high, cross-sectional hardness is excessively increased, so that an impact absorption energy value is lowered even with the occurrence of intergranular fracture, which becomes the cause of deteriorating toughness. Therefore, it is preferred that the microstructure of the steel material is formed of a mixed structure of tempered martensite and bainite, in which the fraction of the tempered martensite is preferably 50 to 80% as a fraction by area.

However, when the matrix structure as the steel material microstructure is tempered martensite, that is, martensite is more than 80% (including 100%), a tempering temperature should be more raised to maintain base material cross-sectional hardness to 200 to 290 HB, and when the cross-sectional hardness is out of the range, it is difficult to secure the low-temperature impact toughness and CTOD values required in the present disclosure.

The low-temperature structure of the tempered martensite or bainite may have a packet size of 17 µm or less. The packet size may be understood as a domain boundary which may have resistance (crack bending characteristics in a boundary when cracks propagate), when cracks propagate physically, as a cluster unit of laths having the same orientation relationship in a low-temperature transformation structure such as bainite or martensite. As an example of the measurement of packet size, the packet size may be measured as a grain boundary plane which may be confirmed when setting domain within 15° of orientation relationship to the same orientation, using electro-back-scattered diffraction (EBSD) equipment. Since the bainite or martensite grows only within prior austenite crystal grains, it has a smaller crystal grain size that the prior austenite. When the packet size is more than 17 µm, since it is difficult to secure sufficient crack propagation resistance, it is difficult to secure sufficient impact toughness, and thus, 17 µm or less is preferred.

Meanwhile, since the dislocation density of the steel material is lowered in the tempering and PWHT processes, strength is reduced. In order to appropriately compensate this, when fine precipitates are used, strength deterioration may be decreased in a heat treatment process. In the case of normalizing material or thermo-mechanical control process (TMCP) material, precipitates such as NbC and NbCN are usually often used, but the temperature at which the precipitates are produced is 800 to 900°C, and they are produced by transformation organics, they are inappropriate for a quenching-tempering (QT) heat treatment steel material. Therefore, it is easy to use vanadium carbides/carbonitrides such as VN and VCN which are produced in a temperature within a range of 550 to 700°C. When the fine precipitates of VC or VCN have a diameter of less than 5 nm, their size is too small, so that a strength improvement effect may be insignificant, and when the size is more than 15 nm, coarsening occurs excessively, and thus, a strength improvement effect is also reduced. Therefore, the size of fine precipitates is appropriately 5 to 15 nm. Meanwhile, when the density of VC and VCN is less than 5 per unit area of 1 µm², the precipitate strengthening effect described above is also reduced, and thus, the number of 5 or more is preferred. The production of the precipitates is determined depending on chemical potential determined by the steel composition and temperature. Though the precipitates having a size of 5 to 15 nm may occur in a large amount, when the number is increased, precipitates are agglomerated with each other to increase the size, and thus, precipitates having a size of 5 to 15 nm are not formed indefinitely. Therefore, though the upper limit of the number of the fine precipitates is not known to a person skilled in the art of the present disclosure, it is not necessarily unclear.

Meanwhile, the microstructure of the welding heat affected zone (HAZ) which is an example of the present disclosure will be described in detail. The HAZ may be HAZ after post-weld heat treatment (PWHT), and in particular, may be HAZ for a coarse grained heat affected zone (CGHAZ).

The welding heat affected zone (HAZ) may have a grain boundary occupancy ratio of cementite present in the grain boundary of 10% or less. The grain boundary occupancy ratio
may be understood as a length ratio of film-like cementite occupied in the grain boundary, and is three-dimensionally an area ratio. As an example of the occupancy ratio measurement, a specimen is etched and observed using SEM and the like, thereby measuring a common grain boundary and a grain boundary where film-like cementite is produced to be distinguished.

Meanwhile, the cementite may have an average size of 1 µm or less.

The HAZ, in particular, CGHAZ microstructure after post-weld heat treatment (PWHT) has preferably 50% or more of tempered martensite as an area fraction. Other than the tempered martensite, the rest may be bainite and other structures. When the fraction by area of the tempered martensite is less than 50%, the occupancy ratio of film-like cementite is increased in the grain boundary after PWHT, and crystal grains are coarsened, and thus, it is difficult to secure an appropriate CTOD value of 0.1 mm or more at - 35°C or lower. For the same reason, the grain boundary occupancy ratio of cementite present in the PWHT grain boundary is preferably 10% or less, and the average size of cementite present in the grain boundary is preferably 1 µm or less.

The prior austenite in the welding heat affected zone (HAZ) may have an average particle size of 200 µm or less. The HAZ microstructure is determined by the microstructure of the base material and an influence of welding conditions such as welding heat input quantity/ preheating temperature/ layered temperature. In particular, since CGHAZZ is a cross section where crystal grains are very coarsened as compared with the base material, material quality as compared with the base material may be deteriorated. The average crystal grain size of the prior austenite based on CGHAZ is preferably 200 µm or less, and when the size is more than the range, quenchability is excessively increased to increase cross-sectional hardness, and thus, the average crystal grain size of CGHAZ is preferably 200 µm or less. The average crystal grain sizes of prior austenite before and after PWHT may have no difference. In order to change the crystal grain size, reverse transformation to austenite single phase range should be performed, and thus, heating to 800°C or higher should be performed, but since the PWHT temperature is about 500 to 600°C, there may be no change in AGS itself.

The welding heat affected zone (HAZ) may have a grain boundary occupancy ratio of cementite present in the grain boundary of 10% or less. The grain boundary occupancy ratio
may be understood as a length ratio of film-like cementite occupied in the grain boundary, and is three-dimensionally an area ratio. As an example of the occupancy ratio measurement, a specimen is etched and observed using SEM and the like, thereby measuring a common grain boundary and a grain boundary where film-like cementite is produced to be distinguished.

The steel material of the present disclosure may secure the strength and low-temperature impact toughness of the base material after PWHT. Specifically, the steel material may have a yield strength of 690 MPa or more and a tensile strength of 770 to 940 MPa, and a low-temperature impact toughness absorption energy of the base material when the Charpy V-notch test is performed at 40°C or lower, of 50 J or more.

Meanwhile, the welding heat affected zone, in particular, CGHAZ after the PWHT may secure excellent low-temperature impact toughness and CTOD characteristics. Specifically, the low-temperature impact toughness absorption energy when the Charpy V-notch test is performed at -40°C may be 40 J or more and the CTOD physical properties at -35°C or lower may be 0.1 mm or more.

Hereinafter, an example of the method for manufacturing a steel material of the present disclosure will be described in detail.

The manufacturing method may include manufacturing a steel slab satisfying the alloy composition described above and the Ceq range of Relation 1, and performing heating, hot rolling, reheating, quenching, and tempering of the steel slab, thereby manufacturing a steel material. This includes reheating - quenching - tempering process, and may be referred to as so-called RQT process.

The steel material manufactured as such may be subjected to welding and post-weld heat treatment (PWHT).

Hereinafter, each process will be described in detail.

### Manufacture of steel slab

A steel slab in which the alloy composition described above the Ceq defined in Relation 1 in a range of 0.50 to 0.70 are satisfied, a maximum size of CaO-Al₂O₃-X (X is one or more of Ti, Mg, and S) composite oxidizing inclusions, which are observed in an upper layer part which is in an area from a surface layer to t/4 (where t is a thickness in mm) in a thickness direction from a surface, is 50 µm or less, and the number per unit area of 1 µm² of the composite oxidizing inclusions is 50 or less is manufactured.

As an example for manufacturing the steel slab, a calcium (Ca) raw material is added to a refined molten steel, and a clean bubbling process may be performed. As a specific example, a metal Ca wire is added to the molten steel after second refining, and the amount of Ca added may be 0.015 to 0.15 kg/ton. The metal Ca wire is formed of a steel material covering a Ca alloy, the thickness of the steel material may be 1.2 to 1.4 mm, and the addition rate of the Ca wire may be 100 to 300 meters/min.

After adding Ca, clean bubbling may be performed so that an inert gas blowing amount in a ladle is 10 to 50 liters/min. The number of inert gas blowing points in the ladle may be two, and a clean bubbling time may be 5 to 40 min.

In the present disclosure, a process before second refining is not particularly defined, and a common method may be applied. In the present disclosure, a process after the Ca addition and clean bubbling process is also not defined particularly, and the molten steel may be cooled under common conditions to manufacture a slab. In addition, when the amount of Al₂O₃ in the molten steel is increased, production and coarsening of inclusions containing both Ca and Al proceed to increase crushed inclusions during rolling, low-temperature impact toughness and CTOD quality of the HAZ part may not secured, and thus, the total amount of inclusions in the molten steel before adding Ca may be limited to 2 to 5 ppm.

Hereinafter, the process of adding Ca and the clean bubbling process will be described in detail.

### (1) Addition of calcium (Ca)

During manufacture of a steel slab, after second refining, a metal Ca wire is added to a molten steel so that the amount of Ca added is 0.015 to 0.15 kg/ton. The metal Ca wire is formed of a steel material covering a Ca alloy, the thickness of the steel material may be 1.2 to 1.4 mm, and the addition rate of the Ca wire may be 100 to 300 meters/min.

During addition of Ca, when the thickness of the steel material covering the Ca alloy of the metal Ca wire is less than 1.2 mm, Ca melts in the upper portion of the ladle to decrease iron constant pressure and deteriorate a Ca real yield, thereby increasing the added amount. However, when the thickness is more than 1.4 mm, the Ca wire comes into contact even with the bottom portion of the ladle to cause dissolved loss of refractory of the ladle, and thus, operational stability may not be secured.

When Ca is added to the molten steel, in order to secure the Ca real yield simultaneously with the thickness of the metal Ca wire, the addition rate of the wire to the molten steel should be controlled. When the addition rate of the wire is less than 100 meters/min, Ca melts in the upper portion of the ladle to decrease the effect of iron constant pressure, thereby deteriorating the Ca real yield to increase the added amount. However, when the addition rate of the wire is more than 300 meters/min, the Ca wire comes into contact even with the bottom portion of the ladle to cause dissolved loss of refractory of the ladle, and thus, operational stability may not be secured. In addition, the addition rate may be preferably 120 to 300 meters/min, and more preferably 140 to 180 meters/min.

When the amount of Ca added is too small, MnS occurs in the center and low-temperature impact toughness due to segregation defects may not be secured, and when the amount is too large, Ca reacts with Al₂O₃ in the refractory to accelerate dissolution loss of the refractory, and thus, operational stability may not be secured. Therefore, considering the problems described above, the amount of Ca added may be 0.015 to 0.15 kg/ton, preferably 0.015 to 0.10 kg/ton, and more preferably 0.050 to 0.10 kg/ton.

### (2) Clean bubbling

After the addition of Ca, clean bubbling may be performed for 5 to 40 min so that an inert gas blowing amount in a ladle is 10 to 50 liters/min, The number of inert gas blowing points in the ladle may be two.

When the inert gas blowing amount in the ladle is too small, the amounts of Al₂O₃ cluster and composite inclusions containing both Ca and Al which are attached to inert gas and removed are decreased to deteriorate cleanliness, and thus, the impact toughness of the HAZ part may not be secured. However, when the amounts are excessive, a stirring force is increased and occurrence as naked molten metal is shown on the surface of the molten steel, and simultaneously slag incorporation occurs, thereby deteriorating cleanliness. Therefore, the inert gas blowing amount may be 10 to 50 liters/min, preferably 15 to 40 liters/min, and more preferably 20 to 30 liters/min.

Meanwhile, when the number of inert gas blowing points in the ladle is one, a non-uniform area in the ladle is present in the molten steel, and the removal ability of the Al₂O₃ cluster and the composite inclusions containing both Ca and Al is deteriorated, and when the number is 3 or more, a stirring force is increased by the occurrence of overlaps during gas blowing, and thus, occurrence as naked molten metal on the surface of the molten steel simultaneously with occurrence of slag incorporation is shown to deteriorate cleanliness.

When the time of applying clean bubbling is too short, in spite of the limitation of the inert gas blowing amount in the ladle, the amounts of the Al₂O₃ cluster and the composite inclusions containing both Ca and Al which are attached to inert gas and removed are decreased to deteriorate cleanliness, and thus, toughness may not be secured. However, when the time is too excessive, a temperature lowering in the molten steel is increased, a temperature gradient in the ladle occurs, and thus, cleanliness is deteriorated. The clean bubbling time may be 5 to 40 min, preferably 7 to 17 min, and more preferably 10 to 15 min.

### Steel slab heating

The steel slab may be heated to a temperature within a range of 1050 to 1300°C.

The slab heating is preferably performed at a temperature of 1150°C or higher, in order to maximize the austenite crystal grain size by bring a carbonitride of Ti or Nb, a TiNb (C,N) coarse crystallized material, or the like formed during casting into a solid solution state again, performing sizing rolling, heating austenite to a recrystallization temperature or higher, and then maintaining temperature. However, when the temperature is excessively high, a problem may occur due to an oxidation scale at a high temperature, and the crystal grains may excessively grow to deteriorate low-temperature impact toughness, and thus, the upper limit may be 1300°C.

### Hot rolling

The heated steel slab may be hot rolled at a finish hot rolling temperature of 830 to 1050°C.

830°C corresponds to an area of a recrystallization temperature or higher. The composite inclusions produced in a refining process should receive deformation by rolling as the strength of a steel sheet increased with the lower rolling temperature, and thus, they are crushed or divided into inclusions having a smaller size or inclusions such as MnS may be stretched to be long. Since the inclusions which are crushed, divided, or stretched into small-sized inclusions as such act as a direct cause of initiation and propagation of low-temperature impact toughness, it is preferred finish hot rolling is performed at 830°C or higher where working hardening does not occur. However, when the temperature is higher than 1050°C, austenite grain growth continuously occurs even after rolling completion, and thus, impact toughness due to increased ductile-brittle transition temperature (DBTT) may be deteriorated.

The steel sheet after the finish hot rolling may have a thickness of 5 to 100 mm, more preferably 5 to 70 mm, and more preferably 5 to 50 mm.

The steel sheet manufactured by the hot rolling may be air cooled to room temperature. After completing the hot rolling, it is a principle to perform air cooling, but accelerated cooling to an appropriate temperature may be performed after completing rolling for the purpose of precipitate growth suppression, process time reduction, and the like.

In the present disclosure, during manufacture of the slab, when a dissolved hydrogen amount in the molten steel is 1.3 ppm or more, multi-stage accumulation cooling from a temperature of 200°C or higher to room temperature based on the surface temperature before reheating heat treatment after hot rolling may be further included. When cooling is performed in the manner of multi-stage accumulation, dissolved hydrogen in the steel material is released, thereby further effectively suppressing microcracks inside by hydrogen, and thus, the low-temperature impact toughness of the base material and the welding heat affected zone may be finally improved.

### Reheating

After the hot rolling, reheating of heating the steel sheet to a temperature of 820 to 950°C and maintaining the temperature for 10 to 40 minutes may be performed.

During the reheating, when the heating temperature is lower than 820°C or the maintenance time is less than 10 minutes, carbides produced during cooling after rolling or grain boundary segregated impurity elements are not in a solid solution state again well, so that they may remain even after cooling, and this may act as the main cause of the low-temperature impact toughness deterioration. Meanwhile, when the heating temperature is higher than 950°C or the maintenance time is more than 40 minutes, prior austenite crystal grain size excessively grows by grain growth, and thus, this may be the main cause of the toughness deterioration due to increased DBTT. Therefore, the reheating temperature is preferably 820 to 950°C, more preferably 850 to 890°C.

### Quenching and tempering

The reheated steel sheet may be quenched and tempered.

A cooling rate during quenching may be one of the most important process factors which determine the microstructure of the base material, and in the present disclosure, cooling may be performed down to 300°C after the reheating, at a cooling rate of 3°C/s to 80°C/s based on the temperature at a t/4 (t: thickness in mm) point of the steel material thickness. When the cooling is finished at 300°C or higher, the microstructure of the base material may include martensite-austenite (MA) constitution due to incomplete cooling transformation, and this is not dissolved in the subsequent tempering and PWHT processes, and thus, is the cause of deteriorating low-temperature impact toughness. Therefore, the cooling end temperature is preferably 300°C or lower.

Meanwhile, when the cooling rate is less than 3°C/s, the matrix structure of the base material is formed of a mixed structure of martensite and bainite required in the present disclosure, or a mixed structure of ferrite and bainite or a bainite single phase structure, instead of a martensite single phase structure. When the bainite structure is the main structure, the strength before PWHT and low-temperature impact toughness may be secured, but due to the grain boundary cementite formation after PWHT described above, it is not easy to secure low-temperature impact toughness and CTOD quality. Meanwhile, when the cooling rate is more than 80°C/s, the microstructure is formed of a 100% martensite structure, cross-sectional hardness is increased so that control is not performed only by the tempering temperature, and there may be a risk of plate breakage due to a cooling rate deviation of the surface layer-center.

Therefore, the cooling rate during quenching is preferably 3°C/s or more and 80°C/s or less, more preferably 5°C/s or more and 30°C/s or less.

The quenched steel sheet is heated to a temperature of 550 to 700°C, thereby performing a tempering heat treatment which is maintained for 5 to 60 minutes. When the tempering temperature is lower than 550°C or the maintenance time is less than 5 minutes, dislocation recovery during quenching does not properly occur, and thus, the strength of the base material is excessively increased, so that a sufficient low-temperature impact toughness value may not be secured, and when the temperature is higher than 700°C or the maintenance time is more than 60 minutes, the welding heat affected zone grain boundary (cementite) may be coarsened, so that it is difficult to guarantee toughness after PWHT.

Meanwhile, other than the RQT, the steel material may be manufactured by directly quenching and tempering after hot rolling (so called DQT).

The manufactured steel material is welded and then subjected to a post-weld heat treatment.

### Welding

The steel material of the present disclosure may be used after performing a post-weld heat treatment (PWHT) after welding, and the steel material of the present disclosure may secure strength and low-temperature impact toughness for the base material after the post-weld heat treatment, and secure the low-temperature impact toughness and low-temperature CTOD characteristics of the welding heat affected zone (HAZ).

When welding is performed on the steel material, there are an unaffected base material, a molten part (welded metal) which is melted and bound, and a welding heat affected zone (HAZ) which is the part of the base material affected by welding heat, and the welded part and the welding heat affected zone are collectively referred to as a welded part. Meanwhile, the welding heat affected zone may be divided into coarse-grain HAZ (CGHAZ), subcritical HAZ (SCHAZ), intercritical HAZ (ICHAZ), fine-grain HAZ (FGHAZ), and the like, depending on the highest heating temperature and structural characteristics. Among them, CGHAZ is cooled from the heat-affected structure (HAZ) during welding to an area having the highest prior austenite crystal grain size by maintaining a high temperature of 1000°C or higher. When the crystal grain size is large, ductility-brittleness transition temperature is increased, and also quenchability is increased, and thus, brittle fracture resistance is decreased when a hard structure is produced. Therefore, CGHAZ is a part of HAZ where toughness values such as low-temperature impact toughness and CTOD are the lowest, and the CGHAZ characteristic may be important.

The welding may be performed by the method known in the art to which the present disclosure pertains, and is not necessarily limited. In the present disclosure, a thermal cycle of the welding may be heating to a maximum temperature of 1250 to 1400°C at a heating rate up to 50°C/s, maintaining at a target temperature for 5 to 10 seconds, performing first cooling down to 500°C at a cooling rate of 10 to 20°C/s, and then performing second cooling down to 200°C at a cooling rate of 5 to 15°C/s. The thermal cycle related to the maximum temperature and the cooling rate may be set as follows, based on the process in which the thermal cycle in the CGHAZ position is measured with a thermocouple when actual welding is performed.

The thermal cycle of the welding is implemented as identically as possible by actually measuring the thermal cycle of the welding heat affected zone (HAZ) during actual welding such as FCAW and SAW. As a practical example of the thermal cycle, the heat input quantity of the flux cored arc weld (FCAW) method may be 1.0 to 2.0 kJ/mm, and the heat input quantity of the submerged arc weld (SAW) method may be 2.5 to 4.0 kJ/mm. Herein, a pre-heating temperature and an interpass temperature may be both 150 to 250°C.

### Post-weld heat treatment (PWHT)

The post-weld heat treatment (PWHT) may be performed by the method known in the art to which the present disclosure pertains, and is not particularly limited. As an example, the PWHT may be performed by maintaining at 595 to 625°C for 180 to 540 minutes (min) according to the standards of ASME Sec.VIII. Meanwhile, the sum LMP in the tempering heat treatment and PWHT heat treatment according to the following Relations 2 and 3 is preferably 17.0 to 19.5.

Specifically, when the tempering temperature and the PWHT temperature are the same, LMP is determined by Relation 2, and when the tempering temperature and the PWHT temperature are different, LMP is determined by Relation 3:

[Relation 2] $LMP = {T}_{k} \left(Log t+20\right)$
wherein Tₖ = tempering and PWHT temperatures in Kelvin, and t = tempering and PWHT time (hour).

   [Relation 3] $\begin{matrix}T \left({logt}_{eq}+20\right) = {T}_{i} \left({logt}_{i}+20\right) \\ Total LMP = {T}_{i} \left[log\left({t}_{i}+{t}_{eq}\right)+20\right]\end{matrix}$
wherein Tᵢ: temperature of PWHT in Kelvin, tᵢ: PWHT time (hour), T: tempering temperature in Kelvin, and t_{eq}: tempering time (hour) equivalent to conversion to the PWHT temperature.

When LMP is less than 17.0, dislocation density is not lowered as described above, so that excessive strength defects may occur, or cross-sectional hardness is too high, so that impact toughness may be deteriorated. However, when LMP is more than 19.5, the grain boundary occupancy ratio of cementite after PWHT is too high, so that it is difficult to appropriately secure impact toughness and CTOD quality. Therefore, the LMP is preferably between 17.0 and 19.5, preferably 18.0 to 19.3.

### Mode for Invention

Hereinafter, the examples of the present disclosure will be described. It is apparent that the following examples may be variously modified by a person skilled in the art to which the present disclosure pertains without departing from the scope of the present disclosure. The following examples are for understanding of the present disclosure, and the scope of the right of the present disclosure is limited not by the following examples, but by the claims described later and the equivalents thereto.

### (Example 1)

Molten steels having the alloy components of Table 1 (in Table 1, the content unit of the component elements is wt%, but the unit of P, S, and Ca is ppm, and the residual components are Fe and unavoidable impurities) of the following Table 1 and Ceq of Relation 1 described above were manufactured into steel slabs under the conditions of Table 2, and heated and hot-rolled to manufacture hot-rolled steel sheets having a thickness of 50 mm.

The manufactured hot-rolled steel sheets were reheated and quenched under the conditions disclosed in Table 3, and tempered at 610°C for 20 minutes.

Meanwhile, in order to confirm the excellent strength and low-temperature impact toughness even after post-weld heat treatment, a heat treatment process simulating the post-weld heat treatment was performed. At this time, the heat treatment process was performed by performing 3 cycles on the tempered hot-rolled steel sheet at 595°C for 180 minutes.

Each specimen manufactured as described above was measured for the microstructure of the base material and the physical properties, and the results are shown in the following Tables 4 and 5.

Herein, the crystal grain size of prior austenite and the fraction of each phase were measured by collecting the specimen and using electron back scattered diffraction (EBSD). At this time, the precipitates and inclusions were measured using a transmission electron microscopy (TEM). The precipitates and the inclusions were confirmed through diffraction patterns and EDX mapping.

The yield/tensile strength was evaluated through a room temperature tensile test, and 0.2% offset was applied to the yield strength. In addition the impact toughness of each specimen was measured using an average of absorption energy values measured 3 times at the corresponding temperature through the Charpy V-notch test. The Brinell hardness was measured by the test according to ISO 6506 part 1.

**[Table 1]**

| Steel type | Alloy composition (wt%) | | | | | | | | | | | | | | | Relation 1 (Ceq) |
|---|---|---|---|---|---|---|---|---|---|---|---|---|---|---|---|---|
| | C | Si | Mn | Al | P* | S* | Nb | V | Ti | Cr | Mo | Cu | Ni | Ca* | B | |
| A | 0.11 | 0.25 | 1.07 | 0.03 | 80 | 10 | 0.001 | 0.03 | 0.002 | 0.55 | 0.55 | 0.1 | 2 | 25 | 0.0025 | 0.63 |
| B | 0.13 | 0.25 | 1.1 | 0.03 | 75 | 8 | 0.002 | 0.015 | 0.013 | 0.43 | 0.54 | 0.08 | 2.2 | 25 | 0.002 | 0.66 |
| C | 0.1 | 0.3 | 1.3 | 0.03 | 90 | 8 | 0.015 | 0.017 | 0.012 | 0.85 | 0.35 | 0.02 | 2.4 | 22 | 0.0021 | 0.72 |
| D | 0.09 | 0.17 | 1.2 | 0.02 | 88 | 10 | 0.013 | 0.02 | 0.012 | 0.55 | 0.29 | 0.04 | 3 | 21 | 0.0026 | 0.66 |
| E | 0.13 | 0.33 | 1.3 | 0.03 | 110 | 11 | 0.012 | 0.013 | 0.015 | 0.53 | 0.33 | 0.15 | 1.9 | 20 | 0.002 | 0.66 |
| F | 0.23 | 0.33 | 1.05 | 0.02 | 80 | 11 | 0.012 | 0.013 | 0.001 | 0.05 | 0.15 | 0.02 | 3.5 | 21 | 0.0027 | 0.68 |
| G | 0.13 | 0.39 | 1.17 | 0.02 | 83 | 13 | 0.014 | 0.015 | 0.001 | 0.55 | 0.59 | 0.12 | 3.6 | 21 | 0.0027 | 0.80 |
| H | 0.08 | 0.51 | 0.85 | 0.02 | 90 | 12 | 0.013 | 0.01 | 0.01 | 0.07 | 0.05 | 0.2 | 1.5 | 20 | 0.0025 | 0.36 |
| I | 0.11 | 0.23 | 0.9 | 0.03 | 91 | 10 | 0.02 | 0.04 | 0.037 | 0.4 | 0.3 | 0.17 | 3 | 29 | 0.002 | 0.62 |

**[Table 2]**

| Specimen No. | Steel type | Slab manufacture | | | | Slab heating / rolling | |
|---|---|---|---|---|---|---|---|
| | | Ca addition | Clean bubbling | | | Slab heating temperature (°C) | Finish hot rolling temperature (°C) |
| | | Amount of Ca added (kg/ton) | Gsa blowing amount (liter/min) | Time (min) | Blowing points (number) | | |
| 1 | A | 0.018 | 13 | 17 | 2 | 1159 | 908 |
| 2 | B | 0.053 | 12 | 19 | 2 | 1163 | 846 |
| 3 | C | 0.08 | 23 | 15 | 2 | 1193 | 966 |
| 4 | D | 0.102 | 26 | 7 | 2 | 1175 | 983 |
| 5 | E | 0.083 | 35 | 16 | 2 | 1183 | 952 |
| 6 | A | 0.195 | 43 | 15 | 2 | 1160 | 898 |
| 7 | A | 0.085 | 84 | 9 | 2 | 1168 | 810 |
| 8 | A | 0.1 | 6 | 16 | 2 | 1169 | 889 |
| 9 | B | 0.085 | 19 | 2 | 2 | 1183 | 910 |
| 10 | B | 0.073 | 18 | 15 | 1 | 1165 | 835 |
| 11 | B | 0.065 | 25 | 13 | 2 | 1325 | 896 |
| 12 | C | 0.076 | 33 | 18 | 2 | 1295 | 1153 |
| 13 | D | 0.034 | 34 | 11 | 2 | 1083 | 905 |
| 14 | C | 0.052 | 41 | 9 | 2 | 1153 | 930 |
| 15 | D | 0.042 | 19 | 8 | 2 | 1208 | 925 |
| 16 | D | 0.063 | 38 | 11 | 2 | 1195 | 955 |
| 17 | D | 0.078 | 25 | 10 | 2 | 1125 | 978 |
| 18 | E | 0.082 | 28 | 8 | 2 | 1100 | 980 |
| 19 | E | 0.091 | 41 | 7 | 2 | 1103 | 1000 |
| 20 | E | 0.1 | 35 | 9 | 2 | 1109 | 890 |
| 21 | F | 0.085 | 33 | 15 | 2 | 1135 | 888 |
| 22 | G | 0.071 | 25 | 17 | 2 | 1153 | 891 |
| 23 | H | 0.036 | 29 | 18 | 2 | 1129 | 890 |
| 24 | I | 0.055 | 34 | 19 | 2 | 1130 | 910 |
| 25 | J | 0.065 | 40 | 7 | 2 | 1098 | 915 |

**[Table 3]**

| Specimen No. | Steel type | Reheating, quenching treatment | | |
|---|---|---|---|---|
| | | Reheating temperature (°C) | Reheating maintenance time (min) | Quenching cooling rate (°C/s) |
| 1 | A | 910 | 11 | 20 |
| 2 | B | 890 | 15 | 15 |
| 3 | C | 910 | 32 | 23 |
| 4 | D | 915 | 25 | 19 |
| 5 | E | 886 | 23 | 15 |
| 6 | A | 845 | 32 | 33 |
| 7 | A | 860 | 35 | 25 |
| 8 | A | 865 | 36 | 18 |
| 9 | B | 910 | 15 | 13 |
| 10 | B | 908 | 15 | 12 |
| 11 | B | 911 | 16 | 9 |
| 12 | C | 925 | 18 | 10 |
| 13 | D | 989 | 20 | 15 |
| 14 | C | 940 | 109 | 32 |
| 15 | D | 851 | 31 | 0.5 |
| 16 | D | 865 | 35 | 108 |
| 17 | D | 841 | 34 | 18 |
| 18 | E | 839 | 19 | 5 |
| 19 | E | 850 | 18 | 9 |
| 20 | E | 908 | 15 | 15 |
| 21 | F | 925 | 18 | 10 |
| 22 | G | 933 | 19 | 25 |
| 23 | H | 940 | 24 | 21 |
| 24 | I | 915 | 25 | 19 |
| 25 | J | 925 | 26 | 32 |

**[Table 4]**

| Specimen No. | Steel type | Constitution of base material microstructure after PWHT | | | | | | |
|---|---|---|---|---|---|---|---|---|
| | | Bainite (% by area) | Tempered martensite (% by area) | Cross-sectional hardness (HB) | Packet size (*µ*m) | Size of VC, VCN precipitate inclusion (nm) | Maximum size of composite oxidizing inclusion (*µ*m) | Number of composite oxidizing inclusions (EA/*µ*m²) |
| 1 | A | 35 | 65 | 285 | 15.3 | 7.5 | 31 | 12 |
| 2 | B | 28 | 72 | 276 | 16.9 | 10.2 | 22 | 8 |
| 3 | C | 24 | 76 | 286 | 16.3 | 14.3 | 15 | 7 |
| 4 | D | 41 | 59 | 265 | 13.5 | 13.5 | 17 | 12 |
| 5 | E | 35 | 65 | 240 | 14.9 | 12.2 | 18 | 15 |
| 6 | A | 34 | 66 | 269 | 15.3 | 10.8 | 105 | 93 |
| 7 | A | 41 | 59 | 286 | 14.1 | 11.5 | 139 | 183 |
| 8 | A | 37 | 63 | 288 | 16.2 | 10.8 | 98 | 105 |
| 9 | B | 42 | 58 | 265 | 16.2 | 11.6 | 119 | 99 |
| 10 | B | 34 | 66 | 254 | 14.8 | 12.5 | 99 | 88 |
| 11 | B | 31 | 69 | 264 | 28.3 | 14.8 | 13 | 33 |
| 12 | C | 33 | 67 | 277 | 26.8 | 8.9 | 17 | 25 |
| 13 | D | 23 | 77 | 265 | 25.9 | 11.3 | 12 | 22 |
| 14 | C | 32 | 68 | 264 | 25.8 | 10.5 | 15 | 15 |
| 15 | D | 89 | 11 | 215 | 15.3 | 12.5 | 10 | 8 |
| 16 | D | 0 | 100 | 309 | 15.5 | 13.4 | 15 | 9 |
| 17 | D | 44 | 56 | 275 | 16.9 | 14.2 | 13 | 13 |
| 18 | E | 39 | 61 | 285 | 16.5 | 10.9 | 14 | 17 |
| 19 | E | 40 | 60 | 255 | 14.3 | 12.5 | 13 | 16 |
| 20 | E | 27 | 73 | 256 | 15.3 | 13.6 | 26 | 22 |
| 21 | F | 28 | 72 | 277 | 15.9 | 11.3 | 9 | 25 |
| 22 | G | 0 | 100 | 315 | 15.8 | 10.8 | 14 | 21 |
| 23 | H | 100 | 0 | 189 | 14.3 | 11.2 | 13 | 13 |
| 24 | I | 41 | 59 | 266 | 13.9 | 13.2 | 12 | 15 |
| 25 | J | 98 | 2 | 278 | 14.3 | 11.5 | 18 | 33 |

**[Table 5]**

| Specimen No. | Steel type | Physical properties of base material after PWHT | | |
|---|---|---|---|---|
| | | Yield strength (MPa) | Tensile strength (MPa) | Impact toughness at -40°C (J) |
| 1 | A | 785 | 892 | 153 |
| 2 | B | 852 | 815 | 192 |
| 3 | C | 792 | 908 | 265 |
| 4 | D | 792 | 822 | 241 |
| 5 | E | 810 | 892 | 169 |
| 6 | A | 835 | 903 | 8 |
| 7 | A | 811 | 892 | 12 |
| 8 | A | 798 | 892 | 15 |
| 9 | B | 769 | 884 | 8 |
| 10 | B | 782 | 835 | 13 |
| 11 | B | 813 | 908 | 23 |
| 12 | C | 735 | 826 | 15 |
| 13 | D | 731 | 895 | 13 |
| 14 | C | 788 | 866 | 9 |
| 15 | D | 643 | 753 | 10 |
| 16 | D | 865 | 995 | 11 |
| 17 | D | 776 | 887 | 295 |
| 18 | E | 782 | 825 | 182 |
| 19 | E | 738 | 765 | 208 |
| 20 | E | 780 | 862 | 211 |
| 21 | F | 799 | 892 | 11 |
| 22 | G | 886 | 1053 | 9 |
| 23 | H | 402 | 515 | 225 |
| 24 | I | 728 | 845 | 12 |
| 25 | J | 654 | 744 | 211 |

As seen from Tables 1 to 5, specimen Nos. 1 to 5 and 17 to 20, which satisfied the alloy composition and the manufacturing conditions suggested by the present disclosure, all secured excellent quality by the base material strength and excellent low-temperature impact toughness at -40°C, even after excellent post-weld heat treatment.

However, it was difficult for specimen Nos. 6 to 16, which satisfied the alloy composition suggested by the present disclosure, but did not satisfy the manufacturing conditions, to secure the characteristics of the base material suggested by the present disclosure. In addition, it was difficult for specimen Nos. 21 to 25, which satisfied the steel material manufacturing conditions suggested by the present disclosure, but did not satisfy the alloy composition, to secure the characteristics of the base material suggested by the present disclosure.

### (Example 2)

The steel materials manufactured under the conditions of Table 3 were welded and subjected to a post-weld heat treatment, and the low-temperature toughness and CTOD characteristics of CGHAZ in the post-weld heat treatment (HAZ) were confirmed.

For this, specifically, the steel materials manufactured according to Tables 1 to 3 were subjected to welding simulation under the welding thermal cycle conditions of Table 6, and subjected to a post-weld heat treatment process with 3 cycles at 595°C for 180 minutes. In Table 6, LMP was derived by Relation 3 described above.

In each specimen manufactured as described above, the microstructure and the physical properties of CGHAZ were measured, and the results are shown in Tables 7 and 8.

Herein, the phase fraction was measured by collecting the specimen and using electron back scattered diffraction (EBSD).

The impact toughness of each specimen was measured using an average of absorption energy values measured 3 times at the corresponding temperature through the Charpy V-notch test. The Brinell hardness was measured by performing the test according to ISO 6506 part1, and the CTOD test was performed according to BS5762 (UK standards).

In addition, the cementite grain boundary occupancy ratio was measured using a transmission electron microscopy (TEM). The cementite grain boundary occupancy ratio was measured as a ratio occupied by film-like cementite of the total grain boundary length.

**[Table 6]**

| Specimen No. | Steel type | LMP | Welding thermal cycle | | |
|---|---|---|---|---|---|
| | | | Maximum temperature (°C) | First cooling rate (°C/s) | Second cooling rate (°C/s) |
| 1 | A | 18.5 | 1260 | 10.5 | 6.5 |
| 2 | B | 17.9 | 1275 | 13 | 10.5 |
| 3 | C | 18.6 | 1289 | 12.9 | 6.4 |
| 4 | D | 19.5 | 1255 | 13.6 | 5.8 |
| 5 | E | 19.1 | 1325 | 14.5 | 8.5 |
| 6 | A | 18.3 | 1315 | 19.2 | 9.5 |
| 7 | A | 18.2 | 1259 | 15.3 | 7.5 |
| 8 | A | 19 | 1266 | 15.4 | 7 |
| 9 | B | 19.2 | 1325 | 11.5 | 6.9 |
| 10 | B | 17.9 | 1265 | 13.6 | 8.3 |
| 11 | B | 18.1 | 1295 | 16.2 | 9.1 |
| 12 | C | 17.6 | 1295 | 15.9 | 11.5 |
| 13 | D | 19 | 1307 | 13.2 | 13.5 |
| 14 | C | 19.1 | 1265 | 13.3 | 10.9 |
| 15 | D | 19.3 | 1355 | 14.5 | 14.2 |
| 16 | D | 18.6 | 1308 | 10.9 | 13.5 |
| 17 | D | 20.9 | 1315 | 11.7 | 10.9 |
| 18 | E | 19 | 1156 | 18.6 | 12.5 |
| 19 | E | 18.6 | 1352 | 36 | 9.8 |
| 20 | E | 18.5 | 1344 | 16.4 | 0.9 |
| 21 | F | 17.6 | 1369 | 11.9 | 7.8 |
| 22 | G | 17.5 | 1359 | 12.6 | 10.9 |
| 23 | H | 18.3 | 1357 | 18.4 | 13.2 |
| 24 | I | 17.9 | 1359 | 15.7 | 14.2 |
| 25 | J | 18.5 | 1355 | 16.6 | 13.9 |

**[Table 7]**

| Specimen No. | Steel type | CGHAZ microstructure after PWHT | | | | |
|---|---|---|---|---|---|---|
| | | Bainite (% by area) | Tempered martensite (% by area) | Cementite grain boundary occupancy ratio (%) | Cementite size (*µ*m) | Cross-sectional hardness (HB) |
| 1 | A | 42 | 58 | 7.5 | 0.56 | 289 |
| 2 | B | 32 | 68 | 7.3 | 0.56 | 288 |
| 3 | C | 28 | 72 | 6.5 | 0.62 | 291 |
| 4 | D | 14 | 86 | 5.4 | 0.54 | 275 |
| 5 | E | 35 | 65 | 1.5 | 0.69 | 256 |
| 6 | A | 25 | 75 | 2.6 | 0.85 | 270 |
| 7 | A | 27 | 73 | 2.9 | 0.62 | 292 |
| 8 | A | 25 | 75 | 3.2 | 0.35 | 277 |
| 9 | B | 25 | 75 | 3.6 | 0.54 | 269 |
| 10 | B | 31 | 69 | 7.5 | 0.36 | 275 |
| 11 | B | 21 | 79 | 3.4 | 0.64 | 281 |
| 12 | C | 11 | 89 | 4.6 | 0.57 | 286 |
| 13 | D | 28 | 72 | 5.1 | 0.85 | 278 |
| 14 | C | 35 | 65 | 4.4 | 0.35 | 288 |
| 15 | D | 28 | 72 | 5.3 | 0.66 | 289 |
| 16 | D | 12 | 88 | 3.9 | 0.91 | 288 |
| 17 | D | 17 | 83 | 18.5 | 2.54 | 245 |
| 18 | E | 25 | 75 | 4.9 | 0.72 | 315 |
| 19 | E | 33 | 67 | 5.8 | 0.33 | 322 |
| 20 | E | 12 | 88 | 19.5 | 0.98 | 235 |
| 21 | F | 8 | 92 | 22.5 | 1.23 | 288 |
| 22 | G | 17 | 83 | 6.6 | 0.57 | 338 |
| 23 | H | 88 | 12 | 23 | 3.38 | 233 |
| 24 | I | 19 | 81 | 5.9 | 0.85 | 281 |
| 25 | J | 11 | 89 | 18.7 | 1.25 | 215 |

**[Table 8]**

| Specimen No. | Steel type | Physical properties of CGHAZ after PWHT | |
|---|---|---|---|
| | | Impact toughness at -40°C (J) | CTOD at -35°C δ(mm) |
| 1 | A | 125 | 0.18 |
| 2 | B | 135 | 0.35 |
| 3 | C | 83 | 0.34 |
| 4 | D | 152 | 0.51 |
| 5 | E | 156 | 0.33 |
| 6 | A | 12 | 0.01 |
| 7 | A | 11 | 0.01 |
| 8 | A | 8 | 0.03 |
| 9 | B | 13 | 0.02 |
| 10 | B | 12 | 0.02 |
| 11 | B | 22 | 0.35 |
| 12 | C | 183 | 0.33 |
| 13 | D | 132 | 0.29 |
| 14 | C | 162 | 0.35 |
| 15 | D | 148 | 0.41 |
| 16 | D | 156 | 0.38 |
| 17 | D | 18 | 0.03 |
| 18 | E | 12 | 0.01 |
| 19 | E | 13 | 0.03 |
| 20 | E | 15 | 0.01 |
| 21 | F | 12 | 0.03 |
| 22 | G | 8 | 0.01 |
| 23 | H | 13 | 0.04 |
| 24 | I | 145 | 0.39 |
| 25 | J | 11 | 0.02 |

As seen from Tables 6 to 8, it was found that specimen Nos. 1 to 5 and 11 to 16, which satisfied the alloy composition and the manufacturing conditions suggested by the present disclosure, secured good CTOD quality as well as excellent low-temperature impact toughness in CGHAZ.

However, specimen Nos. 6 to 10, which satisfied the alloy composition suggested by the present disclosure, but did not satisfy the steel material manufacturing conditions, and, in particular, had a coarse size of the composite oxide inclusions, had poor physical properties of CGHAZ. Meanwhile, specimen Nos. 17 to 20, which satisfied the alloy composition and the steel material manufacturing conditions suggested by the present disclosure, but did not satisfy the welding and post-weld heat treatment conditions, did not secure the physical properties of CGHAZ.

It was found that specimen Nos. 21 to 25, which satisfied the manufacturing conditions suggested by the present disclosure, but did not satisfy the alloy composition, did not satisfy the appropriate quality required in the present disclosure.

While example embodiments have been shown and described above, it will be apparent to those skilled in the art that modifications and variations could be made without departing from the scope of the present disclosure as defined by the appended claims.

## Claims

1. A welding heat affected zone comprising, by weight: 0.05 to 0.20% of C, 0.05 to 0.50% of Si, 0.5 to 2.0% of Mn, 0.005 to 0.10% of Al, 0.010% or less of P, 0.0050% or less of S, 0.001 to 0.070% of Nb, 0.001 to 0.30% of V, 0.001 to 0.030% of Ti, 0.01 to 1.0% of Cr, 0.01 to 1.0% of Mo, 0.01 to 0.60% of Cu, 1.0 to 4.0% of Ni, 0.001 to 0.005% of B, 0.0005 to 0.0040% of Ca, 0.002% or less of O, and a remainder of Fe and other unavoidable impurities,
wherein Ceq defined by the following Relation 1 satisfies a range of 0.50 to 0.70,
a maximum size of CaO-Al₂O₃-X (X is one or more of Ti, Mg, and S) composite oxidizing inclusions, which are observed in an upper layer part which is in an area from a surface layer to t/4 (where t is a thickness in mm) in a thickness direction from a surface, is 50 µm or less, and the number per unit area of 1 µm² of the composite oxidizing inclusions is 50 or less,
a grain boundary occupancy ratio of cementite present in a grain boundary is 10% or less, and the cementite has an average size of 1 µm or less, and
a cross-sectional part hardness is 200 to 300 HB: [Relation 1] 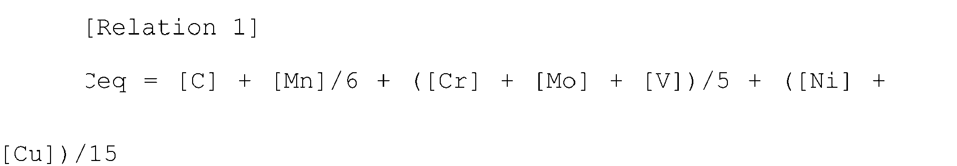 Ceq = [C] + [Mn]/6 + ([Cr] + [Mo] + [V])/5 + ([Ni] + [Cu])/15
wherein [C], [Mn], [Cr], [Mo], [V], [Ni], and [Cu] are contents (wt%) of C, Mn, Cr, Mo, V, Ni, and Cu included in the steel material, respectively, and when the components are not intentionally included, 0 is included.

2. The welding heat affected zone of claim 1, wherein the welding heat affected zone is a coarse grained heat affected zone (CGHAZ).

3. The welding heat affected zone of claim 1, wherein a microstructure of the welding heat affected zone comprises 50% or more of tempered martensite as an area fraction and a remainder of bainite.

4. The welding heat affected zone of claim 1, wherein an average particle size of prior austenite in the welding heat affected zone is 200 µm or less.

5. The welding heat affected zone of claim 1, wherein the welding heat affected zone has a Charpy impact absorption energy at -40°C of 40 J or more and CTOD characteristics at -35°C of 0.1 mm or more.

6. A method for manufacturing a welding heat affected zone, the method comprising:
preparing a steel material which comprises, by weight: 0.05 to 0.20% of C, 0.05 to 0.50% of Si, 0.5 to 2.0% of Mn, 0.005 to 0.10% of Al, 0.010% or less of P, 0.0050% or less of S, 0.001 to 0.070% of Nb, 0.001 to 0.30% of V, 0.001 to 0.030% of Ti, 0.01 to 1.0% of Cr, 0.01 to 1.0% of Mo, 0.01 to 0.60% of Cu, 1.0 to 4.0% of Ni, 0.001 to 0.005% of B, 0.0005 to 0.0040% of Ca, 0.002% or less of O, and a remainder of Fe and other impurities, satisfies Ceq defined by Relation 1 in a range of 0.60 to 0.70, and has a maximum size of CaO-Al₂O₃-X (X is one or more of Ti, Mg, and S) composite oxidizing inclusions, which are observed in an upper layer part which is in an area from a surface layer to t/4 (where t is a thickness in mm) in a thickness direction from a surface, of 50 µm or less, and the number per unit area of 1 µm² of the inclusions of 50 or less;
welding the steel material; and
subjecting the welded steel material to a post-weld heat-treatment: [Relation 1] 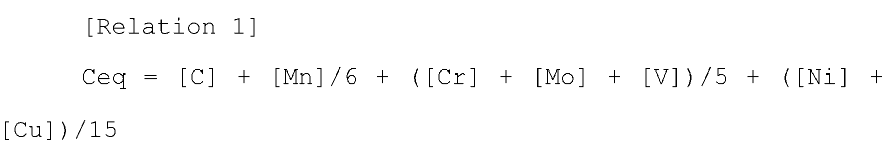 Ceq = [C] + [Mn]/6 + ([Cr] + [Mo] + [V])/5 + ([Ni] + [Cu])/15
wherein [C], [Mn], [Cr], [Mo], [V], [Ni], and [Cu] are contents (wt%) of C, Mn, Cr, Mo, V, Ni, and Cu included in the steel material, respectively, and when the components are not intentionally included, 0 is included.

7. The method for manufacturing a welding heat affected zone of claim 6, wherein a thermal cycle of the welding is heating to a maximum temperature of 1250 to 1400°C at a heating rate up to 50°C/s, maintaining at a target temperature for 5 to 10 seconds, performing first cooling down to 500°C at a cooling rate of 10 to 20°C/s, and then performing second cooling down to 200°C at a cooling rate of 5 to 15°C/s.

8. The method for manufacturing a welding heat affected zone of claim 6, wherein the welding is FCAW welding performed at a heat input quantity of 1.0 to 2.0 kJ/mm under welding conditions of preheating and interpass temperatures at 150 to 250°C or SAW welding performed at a heat input quantity of 2.0 to 4.0 kJ/mm under welding conditions of preheating and interpass temperatures at 150 to 250°C.

9. The method for manufacturing a welding heat affected zone of claim 6, wherein the post-weld heat treatment is performed by maintaining at 595 to 625°C for 180 to 540 minutes (min).

10. The method for manufacturing a welding heat affected zone of claim 6,
wherein the steel material comprises 50% or more (including 100%) of tempered martensite as a fraction by area and a remainder of bainite and other impurities structure, as a microstructure, and
a packet size of the tempered martensite and the bainite is 17 µm or less.

11. The method for manufacturing a welding heat affected zone of claim 10, wherein when the tempered martensite is more than 80%, a cross-sectional Brinell hardness of the steel material is 220 to 290 HB.

12. The method for manufacturing a welding heat affected zone of claim 10, wherein the steel material has 5 or more VC or VCN precipitates having a diameter of 5 to 15 nm per 1 µm², of precipitates observed in a steel material cross section.

13. The method for manufacturing a welding heat affected zone of claim 10, wherein an average particle size of the prior austenite of the steel material is 30 µm or less.

14. The method for manufacturing a welding heat affected zone of claim 6, wherein the steel material is manufactured by a manufacturing method comprising:
manufacturing a steel slab;
reheating the steel slab to a temperature within a range of 1050 to 1300°C;
hot rolling the steel slab at a finish hot rolling temperature of 830 to 1050°C to manufacture a steel material;
heating the steel material to a temperature within a range of 820 to 950°C, maintaining the temperature for 10 to 40 minutes, and cooling to a temperature of 300°C or lower at a cooling rate of 3°C/s to 80°C/s based on a temperature at a steel material thickness t/4; and
after the cooling, performing a tempering heat treatment of heating the steel material to 550 to 700°C and maintaining the temperature for 5 to 60 minutes.

15. The method for manufacturing a welding heat affected zone of claim 14, wherein the manufacturing of a steel slab comprises:
after second refining, adding a metal Ca wire to a molten steel so that an amount of Ca added is 0.015 to 0.15 kg/ton; and
after adding Ca, performing clean bubbling for 5 to 40 min so that an inert gas blowing amount in a ladle is 10 to 50 liters/min,
wherein an addition rate of the Ca wire is 100 to 300 meters/min, and the number of inert gas blowing points in the ladle is two.

16. The method for manufacturing a welding heat affected zone of claim 14, wherein when the temperatures of the tempering heat treatment and the post-weld heat treatment are the same, LMP according to the following Relation 2 is 17.0 to 19.5: [Relation 2] $LMP = {T}_{k} \left(Log t+20\right)$ wherein Tₖ = tempering and PWHT temperatures in Kelvin, and t = tempering and PWHT time (hour).

17. The method for manufacturing a welding heat affected zone of claim 14, wherein when the temperatures of the tempering heat treatment and the post-weld heat treatment are different, LMP according to the following Relation 3 is 17.0 to 19.5: [Relation 3] $\begin{matrix}T \left({logt}_{eq}+20\right) = {T}_{i} \left({logt}_{i}+20\right) \\ Total LMP = {T}_{i} \left[log\left({t}_{i}+{t}_{eq}\right)+20\right]\end{matrix}$ wherein Tᵢ: temperature of PWHT in Kelvin, tᵢ: PWHT time (hour), T: tempering temperature in Kelvin, and t_{eq}: tempering time (hour) equivalent to conversion to the PWHT temperature.
